# EUROPEAN PATENT SPECIFICATION

(11) **EP 1 676 238 B1**
(45) Date of publication and mention of the grant of the patent: **11.06.2008**
(21) Application number: 04770204.8
(22) Date of filing: 07.10.2004
(51) Int. Cl.: G06T 7/00

(54) **A METHOD FOR MEASURING DIMENSIONS BY MEANS OF A DIGITAL CAMERA**
VERFAHREN ZUR MESSUNG VON ABMESSUNGEN MITTELS EINER DIGITALKAMERA
PROCEDE DE MESURE DE DIMENSIONS A L'AIDE D'UNE CAMERA NUMERIQUE

(30) Priority: 13.10.2003 EP 03103765
(43) Date of publication of application: 05.07.2006
(73) Proprietor: Koninklijke Philips Electronics N.V., 5621 BA Eindhoven (NL)
(72) Inventor: VROOMEN, Hubert, G., J., J., A., NL-5656 AA Eindhoven (NL)
(74) Representative: van der Veer, Johannis Leendert
(86) International application number: PCT/IB2004/052018
(87) International publication number: WO 2005/036461

(56) References cited:
- EP-A- 0 500 400
- EP-A- 0 782 100
- WO-A-01/95109
- DE-A- 4 009 144
- US-A- 6 009 189

## Description

The invention is related to a method for measuring dimensions of an object by means of a digital camera provided with image processing means, with detection means for detecting points on the image, and with coordinate calculation means for calculating the coordinates of detected points on the image, whereby the distance between a first detectable point and a second detectable point on the object is measured by making a first image comprising said first detectable point, then displacing the field of view of the digital camera, and subsequently making an other image comprising said second detectable point, whereby the coordinates of said first detectable point on said first image and the coordinates of said second detectable point on said other image are calculated, and whereby the displacement of said field of view is determined in order to calculate said distance between said first detectable point and said second detectable point. The digital camera is preferably a CCD camera (CCD means Charge Coupled Device), or it is a CMOS camera (CMOS means Complementary Metal Oxide Semiconductor), or any other digital imaging equipment.

Such a method for high precision measuring of dimensions of an object, in particular the dimensions of an opening or gap in a die for extruding products, and an apparatus to apply the method, are disclosed in EP-A-0500400. Thereby the field of view is displaced by displacing the digital camera in a direction perpendicular to its direction of photographing.

To measure the distance between two points of an object by means of a digital camera, the object can be placed in the field of view of the camera, in a predetermined position and at a predetermined distance from the camera. Based on the signals from the digital camera, an image can be processed showing the field of view of the camera, and showing said two points, provided that these points are detectable. After the points are detected and after the coordinates of the two points are calculated, the distance between the two points can easily be measured, i.e. calculated.

For example, a point is detectable in case it is a so called intensity reversing point, i.e. a point on the image at the border of two different colours, in particular black and white or a dark and a light colour. Especially in case the representation on the image shows angular points, sharp curves or crossings of lines, such points are detectable on the image. After a point on the image is detected, the coordinates of it can be calculated, so that its location on the image is exactly determined.

In case the distance between two the points is larger than the field of view of the digital camera, the camera can zoom out to enlarge its field of view. The same can be achieved by increasing the distance between the digital camera and the object. However, in such case the accuracy of the measurement will decrease. So, if the accuracy has to be maintained, zooming out is not an option.

EP-A-0500400 presents a solution for that problem by making use of a CCD camera that can be displaced in a direction perpendicular to the direction of photographing. A first image showing the first detectable point is made and an other image showing the second detectable point is made, and furthermore the displacement of the CCD camera is detected by measuring an X- and Y-coordinate of the CCD camera. Therefore an X-axis table and a separate Y-axis table are proposed to determine the position of the CCD camera during photographing.

US-A-6 009 189 discloses another approach for making non-contact dimensional measurements of inaccessible objects e.g. in endoscopy, wherein overlapping views including points of interest are taken, but the determination of the distance between points of interest is made by the a computer only after the user has determined the location of said points (by positioning a cursor) and read and entered the value of a viewed micrometer scale.

The object of the invention is a method and system as set out in the appended claims for measuring dimensions of an object by means of a digital camera, whereby the distance to be measured is larger than the field of view of the digital camera, and whereby no additional means for determining the displacement of the field of view of the digital camera are required.

To accomplish with that object, two or more overlapping images are made by the digital camera, whereupon corresponding detectable points in the overlapping portions of overlapping images are detected, after which the coordinates of said corresponding detectable points in both images are calculated in order to determine the displacement of the field of view of the digital camera relative to the object to be measured.

Overlapping images means that a certain portion of the object to be measured, or a certain portion of the surrounding area, appears on the image that is made before a displacement of the field of view of the digital camera as well as on the image that is made after that displacement. Thereby a portion of one image shows the same representation as a portion of the other image, i.e. both portions are identical. The displacement of the field of view of the digital camera between the moments of making the two images can be exactly determined by detecting detectable points on both said identical portions and by calculating the coordinates of said points on each of the two images. The differences of the coordinates correspond to the displacement of the field of view of the digital camera. This manner of calculating the displacement of the field of view can be done by making use of the means that are already present, so that there is no need for additional means for measuring the displacement of the digital camera, in particular for mechanical additional means as proposed in EP-A-0500400.

In one preferred embodiment said field of view is displaced by displacing the digital camera in a direction perpendicular to its direction of photographing. Thereby the digital camera can be mounted in a frame that can be displaced with respect to the object to be measured, as is shown in EP-A-0500400.

In another preferred embodiment said field of view is displaced by moving the object to be measured with respect to the digital camera. Because the distance and the direction of the displacement is determined through the images taken by the digital camera, there are no special requirements for controlling said displacement. The object can be displaced over an unknown distance, provided that there is an appropriate overlap. Such overlap should include one or more detectable points.

In still another preferred embodiment the field of view is seen by the digital camera through an adjustable optical device, such as one or more movable mirrors and/or lenses. In general, a relative small movement of a mirror or lens can cause a rather large displacement of the field of view, and it will be clear the accuracy when measuring such small movement is low. However, according to the invention, there is no need for measuring the movement of the mirror and/or lens, because the result, i.e. the displacement of the field of view, is measured.

In one preferred embodiment, a number of overlapping images is processed, whereby all images show a detectable line of the object. Such line can be a portion of the contour of the object or a border between different colours or the like. The field of view can follow that line and from time to time the digital camera can make a photograph, so that an image can be processed. The displacement of the field of view to a next image can be controlled by the shape of the line on the image, so that the movement of the field of view follows the line.

The invention is also related to a system for measuring dimensions of an object comprising a digital camera provided with image processing means, detection means for detecting points on the image, and coordinate calculation means for calculating the coordinates of detected points on the image, so that the distance between a first detectable point and a second detectable point on the object can be measured by making a first image comprising said first detectable point, then displacing the field of view of the digital camera, and subsequently making an other image comprising said second detectable point, whereby the coordinates of said first detectable point on said first image and the coordinates of said second detectable point on said other image can be calculated, and whereby the displacement of said field of view can be determined in order to calculate said distance between said first detectable point and said second detectable point, whereby means are present for detecting corresponding detectable points on two overlapping images, and means for determining the displacement of the field of view by calculating the coordinates of corresponding detectable points on an image made before the displacement and a overlapping image made after the displacement.

The invention will now be further elucidated by means of a description of an embodiment of a measuring system, whereby reference is made to the drawing comprising figures which are only schematic representations, in which:
Fig. 1 shows a measuring system;
Fig. 2 shows a field of view of the camera; and
Fig. 3 shows two overlapping fields of view.

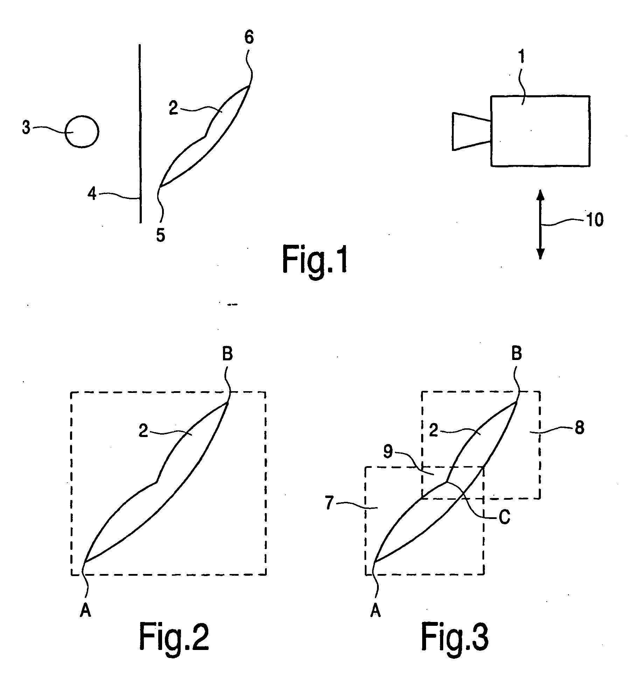

Figure 1 shows a digital imaging device 1, in this example a CCD camera, and an object 2 in front of the camera 1. Object 2 is shown in the position as it is seen by the CCD camera 1. Behind the object 2, seen from the camera 1, there are a light source 3 and a diffuser plate 4. The light source 3 illuminates the diffuser plate 4, so that the contour of the object 2 can be seen by the CCD camera 1 as a sharp border between a dark colour (the object 2) and a light colour (the surrounding area, i.e. the diffuser plate).

The measurement system is furthermore provided with image processing means to process images based on the signals of the CCD camera, with detection means for detecting points on a processed image, and with coordinate calculation means for calculating the coordinates of detected points on an image.

In this example, the length of the object 2 must be measured by means of the measuring system. The length of the object is the distance between the two ends 5,6 of the object 2, as it is seen by the CCD camera 1, i.e. in a certain position with respect to the camera 1. By measuring that dimension of the object 2, a specific quality of the object 2 can be checked, provided that the accuracy of the measurement is high enough.

The CCD camera 1 can be adjusted in such a way that the whole object 2 is within its field of view, so that an image can be processed showing the whole contour of the object 2. That image is shown in figure 2, indicated with a striped line. Then the two ends 5,6 of the object 2 can be detected as point A and point B on the image, and subsequently the coordinates of these two points A,B on the image can be calculated, so that the distance between them can be determined.

The accuracy of such measurement depends on the number of picture elements or pixels on the image. In principle, the accuracy of the calculated coordinates of a detected point on the image corresponds with the dimension of a pixel (pixel size). And when making use of special techniques, such as interpolation of grey values, it is possible to increase the accuracy, but the accuracy will remain limited.

To increase the accuracy of the measurement, the CCD camera 1 can zoom in to increase the scale of the represented object 2 on the image, whereby the dimensions of the object 2 on the processed image are larger. However, the field of view of the CCD camera 1 will decrease accordingly, whereby it may occur that it is not possible to represent the whole object 2 on one image. In that case, two overlapping images (i.e. partly overlapping) can be processed, together showing the whole object 2.

Figure 3 shows these two overlapping images 7,8, which are indicated with a striped line. After the first image 7 is taken by the CCD camera (i.e. processed by the image processing means based on the signals of the camera), the camera is displaced in a direction perpendicular to its direction of photographing, and subsequently the second image is taken. The said direction of the displacement of the camera 1 is indicated with arrow 10, whereby the displacement can have also a component perpendicular to the plane of the drawing. The two images 7,8 have an overlapping area 9, and together they represent the whole object 2.

The distance between the two ends 5,6 of the object 2 is determined as follows. On the first image 7 the lower end 5 of the object 2 is detected by the detection means as point A, and subsequently the coordinates of that point A on the first image 7 are calculated by the coordinate calculation means. Then, on the second image 8 the upper end 6 of the object 2 is detected as point B, and the coordinates of that point B on the second image 8 are calculated. The accuracy of the coordinates of both detected points A,B is relative high, corresponding to the increased scale of the representation of the object 2 on the images 7,8.

It will be clear that the distance between point A and point B can be easily determined after the position of the first image 7 with respect to the second image 8 is known. This mutual relation between the two images 7,8 is determined by detecting on both images 7,8 the same detectable point, or pattern of points, in the overlapping area of the two images 7,8. In the described example of an embodiment, the detectable point C is detected by the detection means. Point C is a detectable point of the object 2, because it represents a sharp curve in the contour of the object 2. Then the coordinates of point C on each of the two images 7,8 are calculated by the coordinate calculation means. In fact, the differences between the two sets of coordinates represent the mutual relation of the two images 7,8, so that the position of the first image 7 with respect to the position of the second image 8 is determined.

The detectable point in the overlapping area of two images can also be the representation of a point that is not present on the object to be measured, but present on a structure near the object, for example on the diffuser plate 4. Therefore the diffuser plate 4 can be provided with a pattern of detectable dots and/or lines. In case the distance between the diffuser plate 4 and the CCD camera 1 is exactly known, the mutual relation of two images can be determined when the coordinates of a certain detectable point on the represented diffuser plate 4 in the overlapping area 9 of two images 7,8 are calculated.

In the described example of an embodiment the whole object 2 is represented on two images 7,8. However, the invention can also be applied by making use of more than two images, provided that each two neighbouring images overlap each other partly, so that in each overlapping area one or more detectable points can be found.

When inspecting an object which is much larger than the field of view of the CCD camera, a number of mutual overlapping images can be taken, whereby the field of view of the CCD camera follows a (curved) line, which is detected on the representation of the object. In case the system has to inspect objects having a known shape, the field of view can follow a predetermined line. But in all these cases overlapping images are made, so that the shape of the object can be checked.

The embodiment as described above is merely an example of the method of measuring dimensions and/or the shape of an object; a great many other embodiments are possible. For example, in case a difference in colour on the object has to be detected, the light source 3 in figure 1 should not be located behind the object 2 (seen from the camera 1), but at the other side of the object 3 (in figure 1 the right side).

## Claims

1. A method for measuring dimensions of an object (2) by means of a digital camera (1) provided with image processing means, with detection means for detecting points (A,B) on the image (7,8), and with coordinate calculation means for calculating the coordinates of detected points (A,B) on the image (7,8), whereby the distance between a first detectable point (A) and a second detectable point (B) on the object (2) is measured by making a first image (7) comprising said first detectable point (A), then displacing the field of view of the digital camera (1), and subsequently making an other image (8) comprising said second detectable point (B), whereby the coordinates of said first detectable point (A) on said first image (7) and the coordinates of said second detectable point (B) on said other image (8) are calculated, whereby the displacement of said field of view is determined in order to calculate said distance between said first detectable point (A) and said second detectable point (B), and whereby two or more overlapping images (7,8) are made by the digital camera (1), **characterized in that** corresponding detectable points (C) in the overlapping part (9) of overlapping images (7,8) are detected, after which the coordinates of said corresponding detectable points (C) in both images (7,8) are calculated in order to determine the displacement of said field of view.

2. A method as claimed in claim 1, **characterized in that** said field of view is displaced by displacing the digital camera (1) in a direction perpendicular to its direction of photographing.

3. A method as claimed in claim 1, **characterized in that** said field of view is displaced by moving the object (2) to be measured.

4. A method as claimed in claim 1, **characterized in that** the field of view is seen by the digital camera (1) through an adjustable optical device.

5. A method as claimed in any one of the preceding claims, **characterized in that** a number of overlapping images (7,8) is processed, whereby all images show a detectable line of the object (2).

6. A system for measuring dimensions of an object (2) comprising a digital camera (1) provided with image processing means, detection means for detecting points (A,B) on the image (7,8), and coordinate calculation means for calculating the coordinates of detected points (A,B) on the image (7,8), so that the distance between a first detectable point (A) and a second detectable point (B) on the object (2) can be measured by making a first image (7) comprising said first detectable point (A), then displacing the field of view of the digital camera (1), and subsequently making an other image (8) comprising said second detectable point (B), whereby the coordinates of said first detectable point (A) on said first image (7) and the coordinates of said second detectable point (B) on said other image (8) can be calculated, whereby the displacement of said field of view can be determined in order to calculate said distance between said first detectable point (A) and said second detectable point (B), and whereby means are provided for detecting corresponding detectable points (C) on two overlapping images (7,8), **characterized by** means for determining the displacement of the field of view by calculating the coordinates of corresponding detectable points (C) on an image (7) made before the displacement and a overlapping image (8) made after the displacement.

## Patentansprüche

1. Verfahren zum Messen von Abmessungen eines Objekts (2) mit Hilfe einer digitalen Kamera (1), die mit Bildverarbeitungsmitteln, mit Detektionsmitteln zum Detektieren von Punkten (A,B) auf dem Bild (7,8) und mit Koordinatenberechnungsmitteln zum Berechnen der Koordinaten detektierter Punkte (A,B) auf dem Bild (7,8) versehen ist, wobei der Abstand zwischen einem ersten detektierbaren Punkt (A) und einem zweiten detektierbaren Punkt (B) auf dem Objekt (2) gemessen wird, indem ein erstes Bild (7) erstellt wird, das den genannten ersten detektierbaren Punkt (A) umfasst, dann das Gesichtsfeld der digitalen Kamera (1) verlagert wird und anschließend ein anderes Bild (8) erstellt wird, das den genannten zweiten detektierbaren Punkt (B) umfasst, wobei die Koordinaten des ersten detektierbaren Punktes (A) auf dem ersten Bild (7) und die Koordinaten des zweiten detektierbaren Punktes (B) auf dem anderen Bild (8) berechnet werden, wobei die Verlagerung des genannten Gesichtsfeldes ermittelt wird, um den genannten Abstand zwischen dem ersten detektierbaren Punkt (A) und dem zweiten detektierbaren Punkt (B) zu berechnen, und wobei mit der digitalen Kamera (1) zwei oder mehr überlappende Bilder (7,8) erstellt werden, **dadurch gekennzeichnet, dass** korrespondierende detektierbare Punkte (C) in dem überlappenden Teil (9) von überlappenden Bildern (7,8) detektiert werden, woraufhin die Koordinaten der genannten korrespondierenden detektierbaren Punkte (C) in beiden Bildern (7,8) berechnet werden, um die Verlagerung des Gesichtsfeldes zu bestimmen.

2. Verfahren nach Anspruch 1, **dadurch gekennzeichnet, dass** das genannte Gesichtsfeld verlagert wird, indem die digitale Kamera (1) in einer Richtung senkrecht zu ihrer Photographierrichtung verlagert wird.

3. Verfahren nach Anspruch 1, **dadurch gekennzeichnet, dass** das genannte Gesichtsfeld verlagert wird, indem das zu messende Objekt (2) bewegt wird.

4. Verfahren nach Anspruch 1, **dadurch gekennzeichnet, dass** das Gesichtsfeld von der digitalen Kamera (1) durch eine einstellbare optische Vorrichtung gesehen wird.

5. Verfahren nach einem der vorhergehenden Ansprüche, **dadurch gekennzeichnet, dass** eine Anzahl überlappender Bilder (7,8) verarbeitet wird, wobei alle Bilder eine detektierbare Linie des Objekts (2) zeigen.

6. System zum Messen von Abmessungen eines Objekts (2) mit einer digitalen Kamera (1), die mit Bildverarbeitungsmitteln, mit Detektionsmitteln zum Detektieren von Punkten (A,B) auf dem Bild (7,8) und mit Koordinatenberechnungsmitteln zum Berechnen der Koordinaten detektierter Punkte (A,B) auf dem Bild (7,8) versehen ist, sodass der Abstand zwischen einem ersten detektierbaren Punkt (A) und einem zweiten detektierbaren Punkt (B) auf dem Objekt (2) gemessen werden kann, indem ein erstes Bild (7) erstellt wird, das den genannten ersten detektierbaren Punkt (A) umfasst, dann das Gesichtsfeld der digitalen Kamera (1) verlagert wird und anschließend ein anderes Bild (8) erstellt wird, das den genannten zweiten detektierbaren Punkt (B) umfasst, wobei die Koordinaten des ersten detektierbaren Punktes (A) auf dem ersten Bild (7) und die Koordinaten des zweiten detektierbaren Punktes (B) auf dem anderen Bild (8) berechnet werden können, wobei die Verlagerung des genannten Gesichtsfeldes ermittelt werden kann, um den genannten Abstand zwischen dem ersten detektierbaren Punkt (A) und dem zweiten detektierbaren Punkt (B) zu berechnen, und wobei Mittel vorgesehen sind, um korrespondierende detektierbare Punkte (C) auf zwei überlappenden Bildern (7,8) zu detektieren, **gekennzeichnet durch** Mittel zum Ermitteln der Verlagerung des Gesichtsfeldes **durch** Berechnen der Koordinaten von korrespondierenden detektierbaren Punkten (C) auf einem vor der Verlagerung erstellten Bild (7) und einem nach der Verlagerung erstellten, überlappenden Bild (8).

## Revendications

1. Procédé pour mesurer des dimensions d'un objet (2) au moyen d'un appareil de prise de vue numérique (1) qui est pourvu de moyens de traitement de l'image, de moyens de détection pour détecter les points (A, B) sur l'image (7, 8) et de moyens de calcul de coordonnées pour calculer les coordonnées des points détectés (A, B) sur l'image (7, 8), suivant lequel on mesure la distance comprise entre un premier point détectable (A) et un second point détectable (B) sur l'objet (2) en réalisant une première image (7) comprenant ledit premier point détectable (A), en déplaçant alors le champ de vision de l'appareil de prise de vue numérique (1) et en réalisant ensuite une autre image (8) comprenant ledit second point détectable (B), suivant lequel on calcule les coordonnées dudit premier point détectable (A) sur ladite première image (7) et les coordonnées dudit second point détectable (B) sur ladite autre image (8), suivant lequel on détermine le déplacement dudit champ de vision afin de calculer ladite distance comprise entre ledit premier point détectable (A) et ledit second point détectable (B), et suivant lequel deux ou plus d'images chevauchantes (7, 8) sont réalisées l'appareil de prise de vue numérique (1), **caractérisé en ce que** l'on détecte des points détectables correspondants (C) dans une partie chevauchante (9) des images chevauchantes (7, 8), après quoi il est calculé les coordonnées desdits points détectables correspondants (C) dans les deux images (7, 8) afin de déterminer le déplacement dudit champ de vision.

2. Procédé selon la revendication 1, **caractérisé en ce qu'**il est déplacé ledit champ de vision par le déplacement de l'appareil de prise de vue numérique (1) dans une direction qui est perpendiculaire à sa direction de photographie.

3. Procédé selon la revendication 1, **caractérisé en ce qu'**il est déplacé ledit champ de vision par le déplacement de l'objet (2) à mesurer.

4. Procédé selon la revendication 1, **caractérisé en ce que** le champ de vision est vu par l'appareil de prise de vue numérique (1) par le biais d'un dispositif optique réglable.

5. Procédé selon l'une quelconque des revendications précédentes 1 à 4, **caractérisé en ce qu'**il est traité un certain nombre d'images chevauchantes (7, 8), suivant lequel toutes les images montrent une ligne détectable de l'objet (2).

6. Système pour mesurer des dimensions d'un objet (2) comprenant un appareil de prise de vue numérique (1) qui est pourvu de moyens de traitement de l'image, de moyens de détection pour détecter les points (A, B) sur l'image (7, 8) et de moyens de calcul de coordonnées pour calculer les coordonnées des points détectés (A, B) sur l'image (7, 8), de sorte que l'on peut mesurer la distance comprise entre un premier point détectable (A) et un second point détectable (B) sur l'objet (2) en réalisant une première image (7) comprenant ledit premier point détectable (A), en déplaçant alors le champ de vision de l'appareil de prise de vue numérique (1) et en réalisant ensuite une autre image (8) comprenant ledit second point détectable (B), suivant lequel on peut calculer les coordonnées dudit premier point détectable (A) sur ladite première image (7) et les coordonnées dudit second point détectable (B) sur ladite autre image (8), suivant lequel on peut déterminer le déplacement dudit champ de vision afin de calculer ladite distance comprise entre ledit premier point détectable (A) et ledit second point détectable (B) et suivant lequel il est prévu des moyens pour détecter des points détectables correspondants (C) sur deux images chevauchantes (7, 8), et **caractérisé par** des moyens pour déterminer le déplacement du champ de vision par le calcul des coordonnées des points détectables correspondants (C) sur une image (7) qui est réalisée avant le déplacement et sur une image chevauchante (8) qui est réalisée après le déplacement.
